# EUROPEAN PATENT APPLICATION

(11) **EP 4 574 506 A1**
(43) Date of publication of application: **25.06.2025**
(21) Application number: 24216747.6
(22) Date of filing: 02.12.2024
(51) Int. Cl.: B60K 35/10

(54) **WORKING VEHICLE**

(30) Priority: 19.12.2023 JP 2023213463
(71) Applicant: Kubota Corporation, Osaka-shi, Osaka 556-8601 (JP)
(72) Inventor: FUJIMOTO, Kazutaka, Sakai-shi, Osaka, 5900908 (JP); TAKEOKA, Susumu, Sakai-shi, Osaka, 5900908 (JP)
(74) Representative: Müller-Boré & Partner Patentanwälte PartG mbB

(57) **Abstract**

A left console (200) disposed within a cabin (10) and electrical equipment (70) accommodated inside the left console are included.

## Description

### TECHNICAL FIELD

The disclosure relates to a technique of a working vehicle.

### BACKGROUND ART

Conventionally, a technique of a working vehicle including a position detection device capable of detecting a position of a vehicle body is known. For example, JP 6640767 B2 discloses such a technique.

JP 6640767 B2 describes a tractor including an antenna unit (position detection device) capable of detecting a position of a vehicle body by receiving a radio signal from a positioning satellite constituting a satellite positioning system. The antenna unit is attached to the front of a roof of a cabin.

Such a tractor is provided with electrical equipment for controlling traveling based on a radio wave signal received by the antenna unit. The electrical equipment may be accommodated inside the roof of the cabin.

Here, the inside of the roof tends to have a relatively high temperature. Therefore, in a case where the electrical equipment is accommodated inside the roof, the temperature condition suitable for use may not be satisfied depending on the specifications of the electrical equipment. For this reason, it is desirable to suitably accommodate electrical equipment that is not suitable for a high-temperature environment.

### SUMMARY OF INVENTION

One aspect of the present disclosure has been made in view of the above circumstances, and an object of the present disclosure is to provide a working vehicle capable of suitably accommodating electrical equipment.

The problem to be solved by one aspect of the present disclosure is as described above, and units for solving the problem will be described below.

A working vehicle according to one aspect of the present disclosure includes a console disposed within a cabin, and electrical equipment accommodated inside the console.

According to one aspect of the present disclosure, the electrical equipment can be suitably accommodated.

The electrical equipment according to an aspect of the present disclosure is disposed in an internal space defined by the console and a fender covered by the console.

According to one aspect of the present disclosure, the internal space between the console and the fender can be used to accommodate the electrical equipment.

The console according to an aspect of the present disclosure is disposed on a left side within the cabin.

According to one aspect of the present disclosure, a left console can be utilized to accommodate the electrical equipment, rather than a right console where equipment generally used for driving operations is intensively disposed.

The working vehicle according to an aspect of the present disclosure further includes a gear shift operation section disposed on one side in a left-right direction within the cabin and used for operating a transmission of a vehicle body, in which the console is disposed on a side opposite to the gear shift operation section in the left-right direction.

According to one aspect of the present disclosure, the electrical equipment can be accommodated by using the console on a side opposite to a side where equipment generally used for the driving operation such as the gear shift operation section is intensively disposed.

The working vehicle according to an aspect of the present disclosure further includes a hydraulic operation section disposed on one side in a left-right direction within the cabin and used for a hydraulic control operation for a working device provided in a vehicle body, in which the console is disposed on a side opposite to the hydraulic operation section in the left-right direction.

According to one aspect of the present disclosure, the electrical equipment can be accommodated using the console on the side opposite to the side where the equipment generally used for the driving operation such as the hydraulic operation section is intensively disposed.

The electrical equipment according to an aspect of the present disclosure includes autonomous driving equipment used for controlling autonomous driving of the working vehicle.

According to one aspect of the present disclosure, equipment that is generally disposed inside a roof of a cabin can be accommodated inside the console.

The autonomous driving equipment according to an aspect of the present disclosure includes equipment capable of recognizing a recognition target based on acquisition information of an information acquisition section capable of acquiring information around a vehicle body.

According to one aspect of the present disclosure, it is possible to accommodate, within the console, equipment that has a relatively large calorific value and a relatively large arithmetic processing amount and may not be suitable for a high-temperature environment.

The console according to an aspect of the present disclosure includes an accommodation portion that is formed to be recessed downward on an upper surface of the console and is capable of accommodating an article, and in the accommodation portion, a hole that is disposed at a position not overlapping with the electrical equipment in a plan view and through which water can be discharged is formed.

According to one aspect of the present disclosure, it is possible to suppress accumulation of water in the accommodation portion and to suppress the water from being splashed on the electrical equipment within the console.

In the console according to an aspect of the present disclosure, a flow path through which water can flow toward a side of the hole is formed, and the flow path includes an inclined portion in which a bottom portion of the accommodation portion is inclined to allow water within the accommodation portion to flow toward the side of the hole.

According to one aspect of the present disclosure, the water can suitably flow toward the hole using the inclined portion.

In the console according to an aspect of the present disclosure, a flow path through which water can flow toward a side of the hole is formed, the accommodation portion includes: a first accommodation portion in which the hole is formed; and a second accommodation portion located on an upstream side of the flow path with respect to the first accommodation portion, and the flow path includes a cutout portion having a shape in which a side wall of the second accommodation portion is cut out to allow water within the second accommodation portion to flow toward the side of the hole.

According to one aspect of the present disclosure, the water can suitably flow toward the hole using the cutout portion.

The working vehicle according to an aspect of the present disclosure further includes a pressing portion formed of a stretchable material and capable of pressing the article accommodated in the accommodation portion from above.

According to one aspect of the present disclosure, it is possible to suppress falling or the like of the article accommodated in the accommodation portion.

The console according to an aspect of the present disclosure includes an electricity outlet disposed in the vicinity of the accommodation portion and capable of extracting electricity from a power source.

According to one aspect of the present disclosure, electricity extracted from the electricity outlet can be fed to electronic equipment accommodated in the accommodation portion.

According to one aspect of the present disclosure, the position detection device can be suitably disposed.

### BRIEF DESCRIPTION OF DRAWINGS

Fig. 1 is a side view illustrating an overall configuration of a tractor according to an embodiment of the present disclosure;
Fig. 2 is a plan cross-sectional view illustrating the interior of a cabin;
Fig. 3 is a perspective view illustrating a left console;
Fig. 4 is a plan view illustrating the left console;
Fig. 5 is an enlarged plan view illustrating a front portion of the left console;
Fig. 6 is an exploded perspective view illustrating an opening and a cover portion of the left console;
Fig. 7 is a perspective view illustrating a cover portion;
Fig. 8A is a bottom perspective view illustrating a portion of the left console around the opening and the cover portion; Fig. 8B is an enlarged side sectional view illustrating the portion around the opening and a bottom cover portion;
Fig. 9 is a perspective view illustrating a pressing portion;
Fig. 10A is an enlarged bottom view illustrating an end portion of a support portion; Fig. 10B is a side cross-sectional view illustrating a state where the support portion is fixed to a second accommodation portion; Fig. 10C is a cross-sectional view taken along line Y-Y in Fig. 10B;
Fig. 11 is a cross-sectional view taken along line X1-X1 in Fig. 4;
Fig. 12 is a cross-sectional view taken along line X2-X2 in Fig. 4; and
Fig. 13 is a cross-sectional view taken along line X3-X3 in Fig. 5.

### DESCRIPTION OF EMBODIMENTS

In the following description, directions indicated by arrows U, D, F, B, L, and R in the drawings are defined as an upward direction, a downward direction, a forward direction, a backward direction, a left direction, and a right direction, respectively.

First, an overall configuration of a tractor 1 according to an embodiment of the present disclosure will be described.

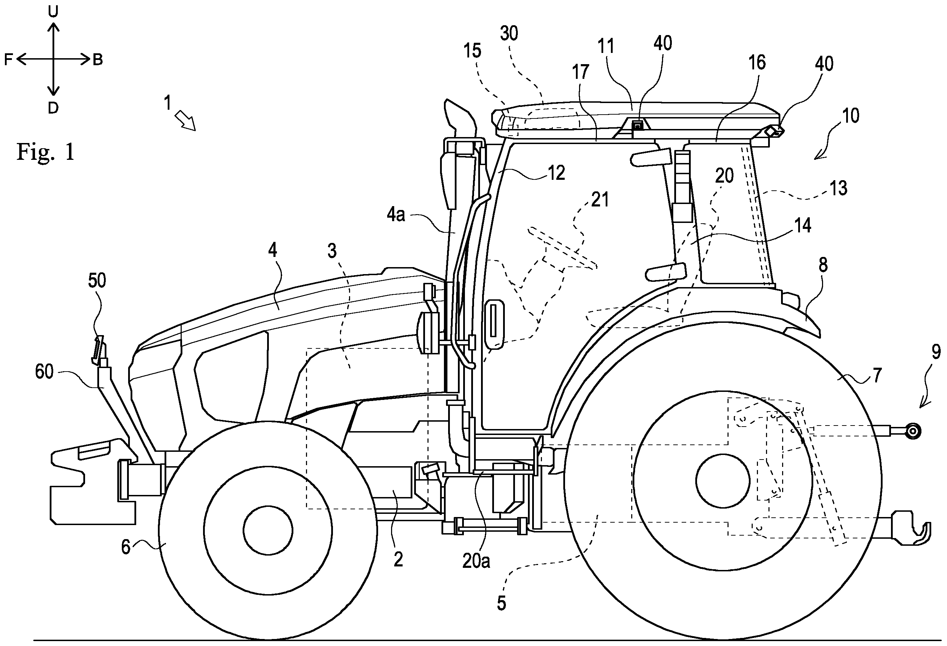

The tractor 1 illustrated in Fig. 1 mainly includes a body frame 2, an engine 3, a bonnet 4, a transmission case 5, front wheels 6, rear wheels 7, a fender 8, a lifting device 9, a seat 20, a steering wheel 21, a cabin 10, and the like.

The machine body frame 2 is a frame-shaped member formed by appropriately combining a plurality of panel members. The machine body frame 2 is formed in a substantially rectangular shape in plan view. The machine body frame 2 is disposed in a front portion of the tractor 1 with its longitudinal direction oriented in a front-rear direction. The engine 3 is fixed to a rear portion of the machine body frame 2. The engine 3 is covered with the bonnet 4. The transmission case 5 is fixed to a rear portion of the engine 3. A muffler 4a that discharges exhaust gas of the engine 3 is disposed on a right side of the bonnet 4.

The front portion of the body frame 2 is supported by a pair of the left and right front wheels 6 through a front axle mechanism (not illustrated). A rear portion of the transmission case 5 is supported by the pair of left and right rear wheels 7 through a rear axle mechanism (not illustrated). A pair of the left and right rear wheels 7 is covered with the fender 8 from substantially above.

The lifting device 9 is provided at a rear portion of the transmission case 5. Various working devices (for example, a cultivator or the like) can be mounted on the lifting device 9. The lifting device 9 can lift and lower the mounted working device by an actuator such as a hydraulic cylinder. Power of the engine 3 can be transmitted to the working device mounted on the lifting device 9 through a PTO shaft (not illustrated).

Power of the engine 3 can be transmitted to the front wheels 6 through the front axle mechanism and can be transmitted to the rear wheels 7 through the rear axle mechanism after being shifted by a transmission (not illustrated) accommodated in the transmission case 5. The front wheels 6 and the rear wheels 7 are rotationally driven by the power of the engine 3, and the tractor 1 can travel. Furthermore, the working device mounted on the lifting device 9 can be driven by the power of the engine 3.

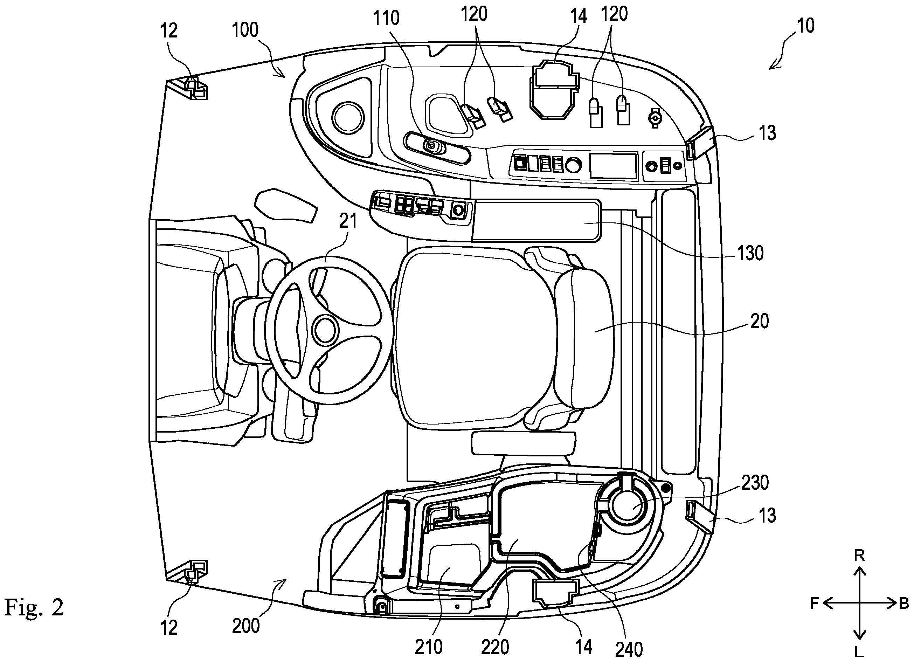

The cabin 10 is provided behind the engine 3. The cabin 10 is placed on a vehicle body (such as the transmission case 5). A living space in which a driver gets is formed inside the cabin 10. As illustrated in Fig. 1, the seat 20 on which a driver sits is disposed substantially at the center of the cabin 10. The cabin 10 is provided with an auxiliary step 20a for getting in and out of the seat 20. The steering wheel 21 for adjusting a turning angle of the front wheels 6 is disposed in front of the cabin 10. A right console 100 and a left console 200 are provided inside the cabin 10 (see Fig. 2). Note that the right console 100 and the left console 200 will be described in detail later.

The cabin 10 is provided with a roof 11 constituting a ceiling (roof) portion. The roof 11 includes an outer roof constituting an upper side (an outer side of the cabin 10) and an inner roof constituting a lower side (an inner side of the cabin 10). Between the outer roof and the inner roof, a space capable of accommodating equipment such as an air conditioner and acoustic equipment is formed.

The cabin 10 includes a front pillar 12 that supports a front portion of the roof 11, a rear pillar 13 that supports a rear portion of the roof 11, and a center pillar 14 that supports a substantially central portion (intermediate portion) in the front-rear direction of the roof 11. The pillars are provided so as to be located on both left and right sides of the cabin 10. Furthermore, the cabin 10 also includes a front beam 15 connecting upper ends of the left and right front pillars 12, a rear beam 16 connecting upper ends of the left and right rear pillars 13 and the left and right center pillars 14, and a side beam 17 connecting upper ends of the left and right rear pillars 13 and the left and right center pillars 14. The side beams 17 are provided so as to be located on both left and right sides of the cabin 10.

Each pillar and each beam are formed in a hollow shape. Wiring connected to equipment (for example, a position detection device 30, a camera 40, a radar unit 50, and the like, which will be described later) provided in the tractor 1 can be inserted into a space inside each pillar and each beam.

Furthermore, the tractor 1 according to the present embodiment includes the position detection device 30, the camera 40, and the radar unit 50.

A position detection device 30 illustrated in Fig. 1 is a device capable of detecting a position (position information including latitude and longitude) of a vehicle body using a satellite positioning system (GNSS) such as a GPS, various sensors, and the like. The position detection device 30 includes an appropriate reception unit for receiving a satellite signal transmitted from a satellite. The position detection device 30 is disposed, for example, in an internal space R of the roof 11. Note that the position detection device 30 may be disposed outside the roof 11 (for example, in front of the roof 11).

The camera 40 illustrated in Fig. 1 can capture an image of the periphery of the vehicle body. The tractor 1 can control the operation of the vehicle body based on the image captured by the camera 40. For example, a person's appearance is learned on the basis of an image captured by a camera, and in a case where it is detected that a person approaches the vicinity of the tractor 1 from an imaging result of each camera, control for stopping the tractor 1 can be performed. Note that the use of each camera is not limited to this, and the captured image can be used for various uses. A plurality of the cameras 40 is disposed around the cabin 10. The plurality of cameras 40 are disposed at positions where the front, right and left sides, and the rear of the vehicle body can be imaged. Note that, in Fig. 1, illustration of a camera 40 that images the front of the vehicle body is omitted.

The radar unit 50 illustrated in Fig. 1 can detect a detection target around the vehicle body using radio waves (for example, millimeter waves). Examples of the detection target include a structure formed of metal or concrete, another vehicle, and a person. The radar unit 50 is provided with a sensor (for example, a millimeter wave sensor) that emits radio waves and receives the radio waves reflected by a detection target to detect the detection target. Fig. 1 illustrates an example in which the radar unit 50 is provided in front of the bonnet 4 of the tractor 1. The radar unit 50 is attached to the vehicle body of the tractor 1 (for example, the front portion of the body frame 2) by a radar support member 60. Note that the radar unit 50 can be provided not only in front of the vehicle body (bonnet 4) but also at any place such as left and right side portions and a rear portion of the vehicle body.

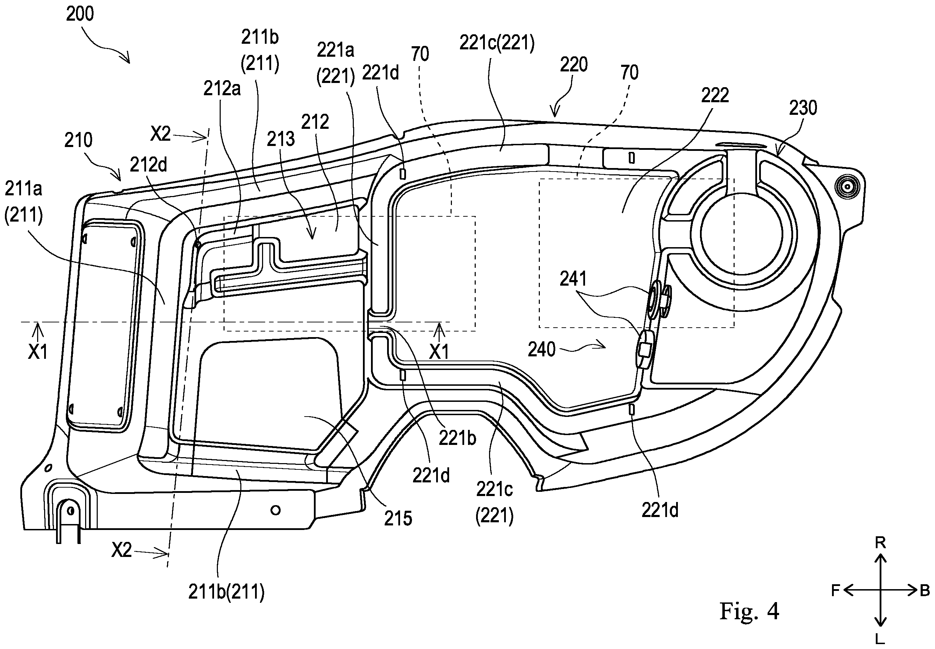

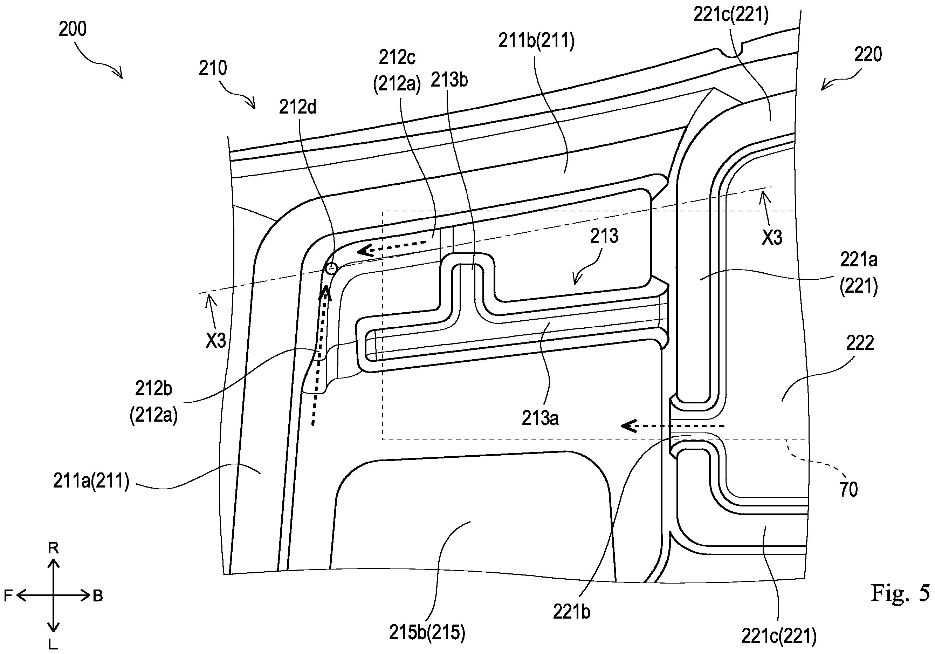

The tractor 1 also includes autonomous driving equipment 70 capable of executing control (autonomous driving control) for automatically driving the tractor 1 based on the position information detected by the position detection device 30, the image captured by the camera 40, and the detection result of the radar unit 50 (Figs. 4 and 5). The control of the autonomous driving includes, for example, control of automatically steering the vehicle body so as to travel straight in parallel to a set predetermined traveling reference line, control of automatically traveling the vehicle body along the created target traveling route, and control of automatically changing the speed or stopping the vehicle body.

The autonomous driving equipment 70 is accommodated inside the left console 200 (the internal space R to be described later). The autonomous driving equipment 70 includes equipment (image ECU) that recognizes (learns) a human figure using an image captured by the camera 40 and recognizes a detection target using a detection result of the radar unit 50, equipment (monitoring ECU) that can execute a program related to autonomous driving, and equipment (modem) that receives information from the position detection device 30 and a remote controller 80. Note that the image ECU has a larger calorific value and a larger arithmetic processing amount than other equipment (ECU and the like). The remote controller 80 includes one used for remote operation of the tractor 1 and one used for operation related to autonomous driving of the tractor 1. Note that the autonomous driving equipment 70 is not limited to the above-described example, and various equipment used for controlling autonomous driving can be adopted.

The autonomous driving equipment 70 is communicably connected to the position detection device 30, the camera 40, and the radar unit 50 through wiring. The wiring connected to the equipment such as the position detection device 30 is connected to the autonomous driving equipment 70 in the left console 200 from a space in the roof 11 through a space inside the left center pillar 14, for example.

Furthermore, various equipment (mounting equipment 90) that operate using electric power can be placed on the left console 200. The mounting equipment 90 includes correction equipment for correcting an error in position information acquired from a satellite positioning system, and a terminal such as a smartphone. The remote controller 80 and the mounting equipment 90 can be accommodated in the accommodation portions (the first accommodation portion 210 and the second accommodation portion 220) provided on the upper surface of the left console 200. Note that an accommodation aspect of the remote controller 80 and the mounting equipment 90 will be described later.

The right console 100 and the left console 200 will be described below.

In the right console 100 illustrated in Fig. 2, operation sections for performing various operations related to the operation of the tractor 1 are disposed. The right console 100 is formed in an elongated shape in the front-rear direction. The right console 100 is disposed on the right side in the cabin 10. More specifically, the right console 100 is disposed on a right side of the seat 20 and the steering wheel 21. The right console 100 is disposed to cover the fender 8 on the right side.

The right console 100 is provided with a gear shift lever 110 used for operating a transmission of a vehicle body and a hydraulic lever 120 used for controlling hydraulic pressure for a working device. Examples of the working device include a working device mounted on the lifting device 9 at the rear of the vehicle body and a working device mounted on the front of the vehicle body. Furthermore, the right console 100 is also provided with an armrest 130. The armrest 130 is disposed immediately to the right of the seat 20. The armrest 130 is provided with an operation section such as an accelerator lever, a position control lever, a tilling depth adjustment dial, or a pumper switch. Note that the operation section provided in the right console 100 is not limited to the one described above, and various operation sections capable of performing an operation related to the operation of the tractor 1 can be adopted.

The left console 200 illustrated in Figs. 2 to 4 can accommodate the autonomous driving equipment 70 therein. On an upper surface of the left console 200, accommodation portions (a first accommodation portion 210 and a second accommodation portion 220 to be described later) capable of accommodating articles (for example, the remote controller 80, the mounting equipment 90, and the like) are formed. The left console 200 is formed in an elongated shape in the front-rear direction. The left console 200 is disposed on the left side (the side opposite to the right console 100 in the left-right direction) in the cabin 10. More specifically, the left console 200 is disposed on the left side of the seat 20 and the steering wheel 21.

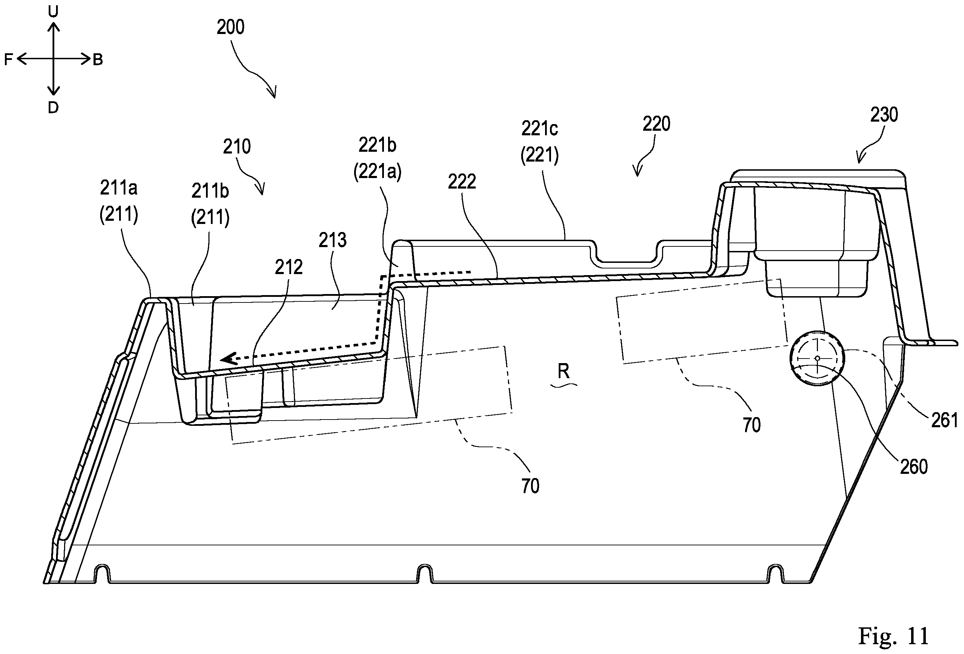

The left console 200 is disposed to cover the fender 8 on the left side. In the present embodiment, the autonomous driving equipment 70 is accommodated in a space defined by the left console 200 and the fender 8 (the internal space R of the left console 200) (see Fig. 11). The autonomous driving equipment 70 in the internal space R is fixed to the fender 8 through an appropriate stay (not illustrated). Fig. 4 illustrates an example in which a plurality of (two) pieces of autonomous driving equipment 70 is accommodated in the internal space R (see Fig. 4).

For example, when a door of the cabin 10 is opened, rainwater or the like may enter the cabin 10. In this case, it is assumed that water enters the accommodation portion of the left console 200. In a case where water is accumulated in the accommodation portion, the article accommodated in the accommodation portion may be immersed in water. Therefore, the left console 200 according to the present embodiment is formed to be able to discharge the water in the accommodation portion to the internal space R. As a result, it is possible to suppress the article accommodated in the accommodation portion from being immersed in water. The left console 200 includes a first accommodation portion 210, a second accommodation portion 220, a bottle holding portion 230, an electric extraction portion 240, a pressing portion 250, and a wiring hole 260.

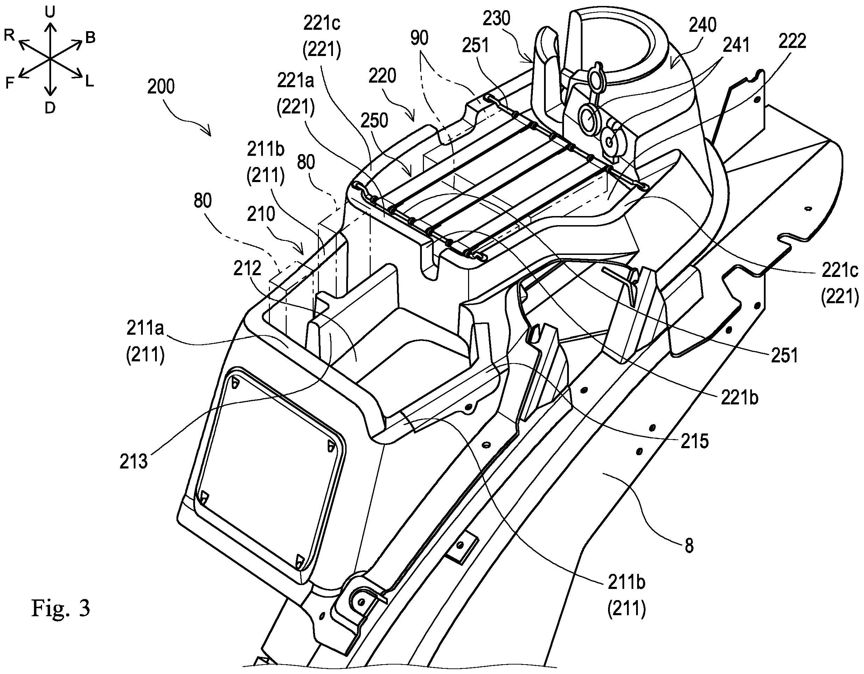

The first accommodation portion 210 illustrated in Figs. 3 to 5 can accommodate an article in the front portion of the left console 200. The first accommodation portion 210 is formed to be recessed downward on the upper surface of the left console 200. The first accommodation portion 210 according to the present embodiment is formed so as to be capable of accommodating the remote controller 80 and the like. The first accommodation portion 210 is formed in a substantially rectangular shape in plan view. The first accommodation portion 210 includes a side wall portion 211, a bottom portion 212, a holding portion 213, an opening 214, and a cover portion 215.

The side wall portion 211 is a portion constituting a side wall of the first accommodation portion 210. The side wall portion 211 is formed so as to rise from an outer peripheral portion of a bottom portion 212 described later. The side wall portion 211 includes a first wall portion 211a constituting a front wall of the first accommodation portion 210 and second wall portions 211b constituting walls on both left and right sides of the first accommodation portion 210. Note that the rear wall of the first accommodation portion 210 is formed as a common wall with a front wall (first wall portion 221a) of the second accommodation portion 220 to be described later.

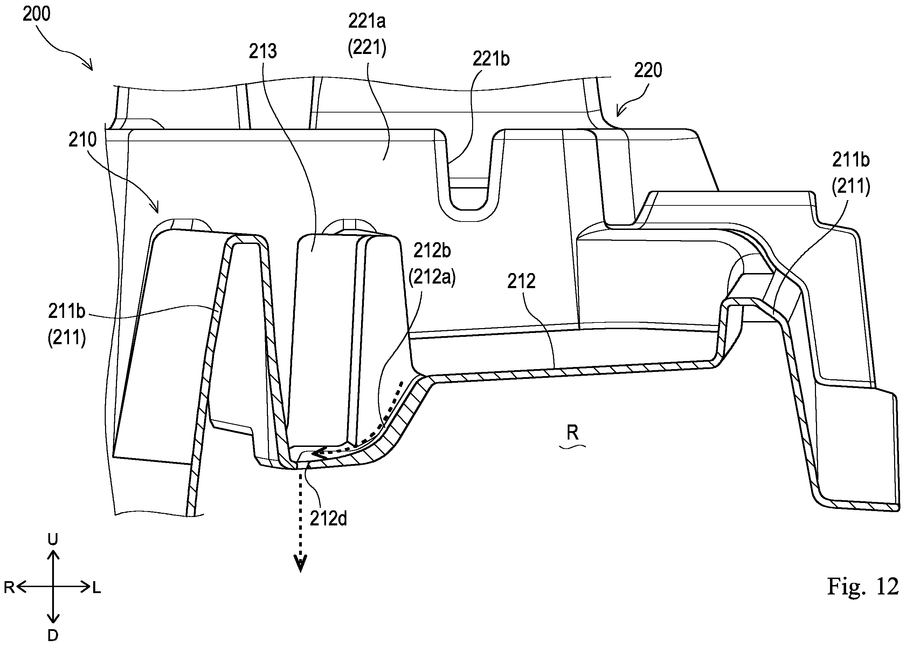

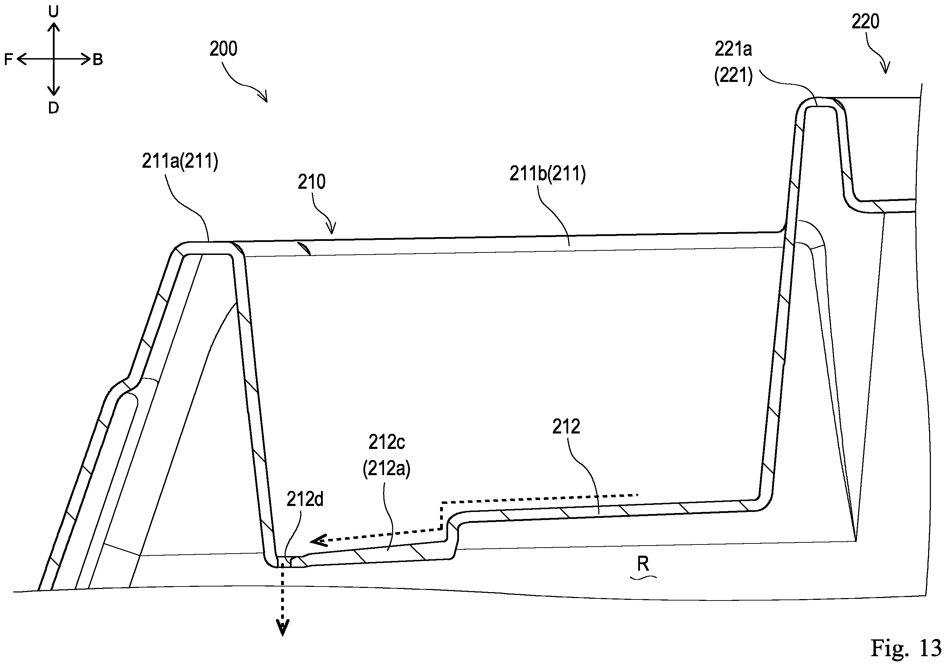

The bottom portion 212 constitutes the bottom of the first accommodation portion 210. As illustrated in Figs. 12 and 13, the bottom portion 212 is formed so as to be inclined downward toward a corner portion on a right front side (right front corner portion) in plan view. The bottom portion 212 is formed such that a height of the right front corner portion is the lowest. Therefore, as indicated by broken arrows in Fig. 5 and Figs. 11 to 13, the water located inside the first accommodation portion 210 flows toward the corner portion on the right front side. The bottom portion 212 includes a groove 212a and a hole 212d.

The groove 212a is a groove formed to be recessed downward on the upper surface of the bottom portion 212. The groove 212a is formed along the side wall portion 211. The groove 212a is formed so as to guide the water in the bottom portion 212 to the right front corner portion. The groove 212a includes a first groove 212b and a second groove 212c.

The first groove 212b is a portion extending substantially in the left-right direction along the first wall portion 211a. More specifically, the first groove 212b is formed along the first wall portion 211a from the right front corner portion of the bottom portion 212 to the middle portion in the left-right direction.

The second groove 212c is a portion extending substantially in the front-rear direction along the right second wall portion 211b. More specifically, the second groove 212c is formed along the right second wall portion 211b from the right front corner portion of the bottom portion 212 to the middle portion in the front-rear direction.

The hole 212d is a portion formed so as to penetrate the bottom portion 212 in a vertical direction. The hole 212d is formed at the right front corner portion of the bottom portion 212. The hole 212d is formed to be able to discharge the water within the first accommodation portion 210 downward (internal space R). As illustrated in Figs. 4 and 5, the hole 212d is formed at a position not overlapping with the autonomous driving equipment 70 accommodated in the internal space R in plan view. As a result, it is possible to suppress water passing (falling) through the hole 212d from being splashed onto the autonomous driving equipment 70.

The holding portion 213 illustrated in Figs. 3 to 5 holds the remote controller 80. The holding portion 213 is formed to rise from the bottom portion 212. The holding portion 213 defines a holding space for holding the remote controller 80 in the first accommodation portion 210. In the present embodiment, the holding portion 213 is formed so as to partition two holding spaces. The holding portion 213 includes a first portion 213a and a second portion 213b.

The first portion 213a constitutes a wall that divides the space in the first accommodation portion 210 into left and right. As illustrated in Fig. 5, the first portion 213a is disposed substantially parallel to the second wall portion 211b so as to be located on the left side of the second wall portion 211b on the right side. The first portion 213a extends forward from the rear end portion of the first accommodation portion 210 to the vicinity of the first groove 212b. A gap is formed between a distal end portion of the first portion 213a in an extending direction and the first wall portion 211a.

The second portion 213b constitutes a wall that divides back and forth a space between the right second wall portion 211b and the first portion 213a in the first accommodation portion 210. The second portion 213b extends rightward from an intermediate portion of the first portion 213a in the front-rear direction to the vicinity of the second groove 212c. A gap is formed between a distal end portion of the second portion 213b in the extending direction and the second wall portion 211b.

As illustrated in Fig. 3, the holding portion 213 as described above defines two holding spaces adj acent to each other in the front-rear direction together with the side wall portion 211. By placing the remote controller 80 in each holding space, the remote controller 80 can be suitably accommodated in the first accommodation portion 210. Furthermore, various articles can be accommodated in a space on the left side of the holding portion 213 in the first accommodation portion 210.

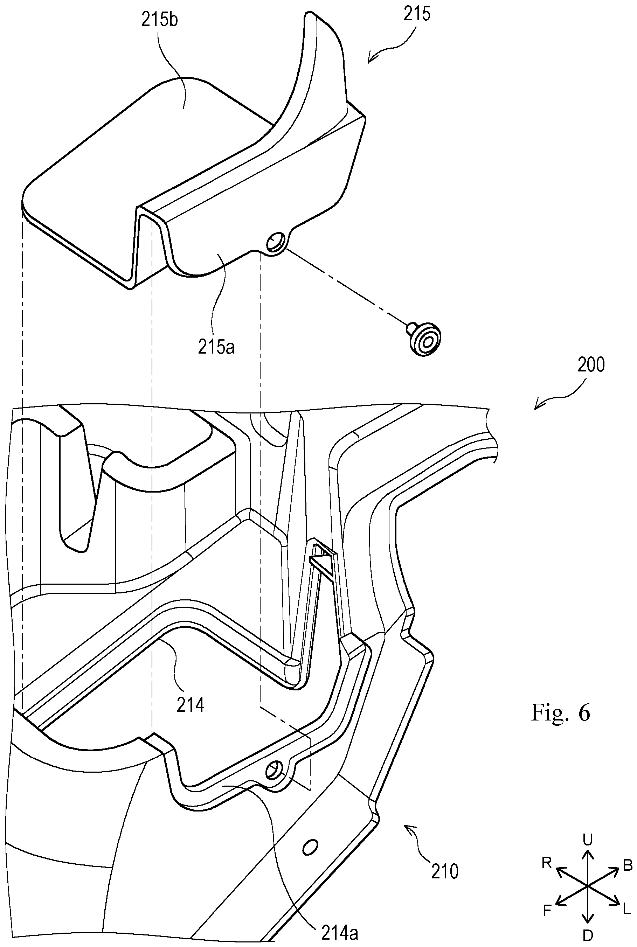

The opening 214 illustrated in Fig. 6 is a portion formed to communicate with the internal space R in the first accommodation portion 210. The opening 214 can be used for maintenance or the like of the autonomous driving equipment 70 accommodated in the internal space R. The opening 214 is formed by cutting out a part of the side wall portion 211 and a part of the bottom portion 212 of the first accommodation portion 210. More specifically, the opening 214 is formed by cutting out the second wall portion 211b on the left side and a portion of the bottom portion 212 on the left side of the portion where the holding portion 213 is formed. The opening 214 can be formed at a position not overlapping with the autonomous driving equipment 70 accommodated in the internal space R in plan view. On an edge portion of a portion of the side wall portion 211 and the bottom portion 212 where the opening 214 is formed, a recess 214a recessed with respect to each surface (a surface opposite to the internal space R) of the side wall portion 211 and the bottom portion 212 is formed.

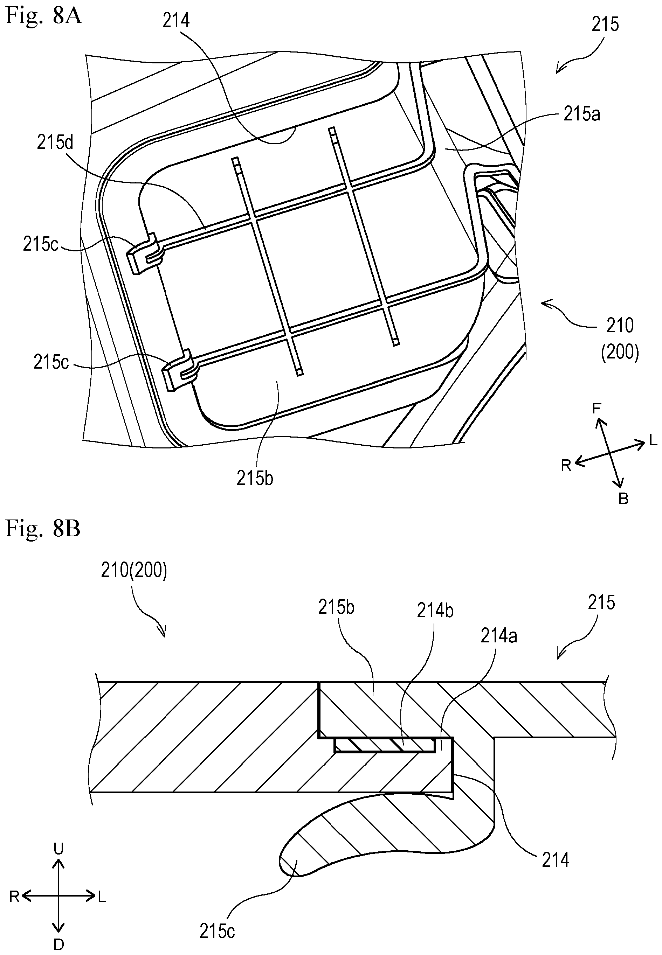

As illustrated in Fig. 8B, the recess 214a is formed so as to be able to abut on the cover portion 215 described later. A packing 214b capable of closing a gap with the cover portion 215 is provided in a portion of the recess 214a that abuts on the cover portion 215. The packing 214b is made of a flexible material such as rubber. Note that, in Fig. 6, illustration of the packing 214b is omitted.

The cover portion 215 illustrated in Figs. 6 to 8 can open and close the opening 214. The cover portion 215 is formed so as to cover a portion of the opening 214 where the side wall portion 211 (the second wall portion 211b on the left side) and the bottom portion 212 are cut out. The cover portion 215 includes a side wall cover portion 215a and a bottom cover portion 215b.

The side wall cover portion 215a is a portion that covers a cutout portion formed in the second wall portion 211b on the left side of the opening 214. The side wall cover portion 215a is formed in a substantially U-shape opening downward in front view. In a state where the cover portion 215 is attached to the first accommodation portion 210, the recess 214a formed in the second wall portion 211b is inserted into the opening formed by the side wall cover portion 215a (see Fig. 6). The side wall cover portion 215a is fixed to the second wall portion 211b using a fastener such as a rivet.

The bottom cover portion 215b is a portion that covers a cutout portion formed in the bottom portion 212 in the opening 214. The bottom cover portion 215b extends rightward from a lower end portion of the side wall cover portion 215a. In this manner, the cover portion 215 is formed in a substantially L shape in front view by the side wall cover portion 215a and the bottom cover portion 215b. In a state where the cover portion 215 is attached to the first accommodation portion 210, the bottom cover portion 215b is placed on the recess 214a formed in the bottom portion 212 (see Fig. 8B)). The bottom cover portion 215b includes a guide portion 215c and a rib 215d.

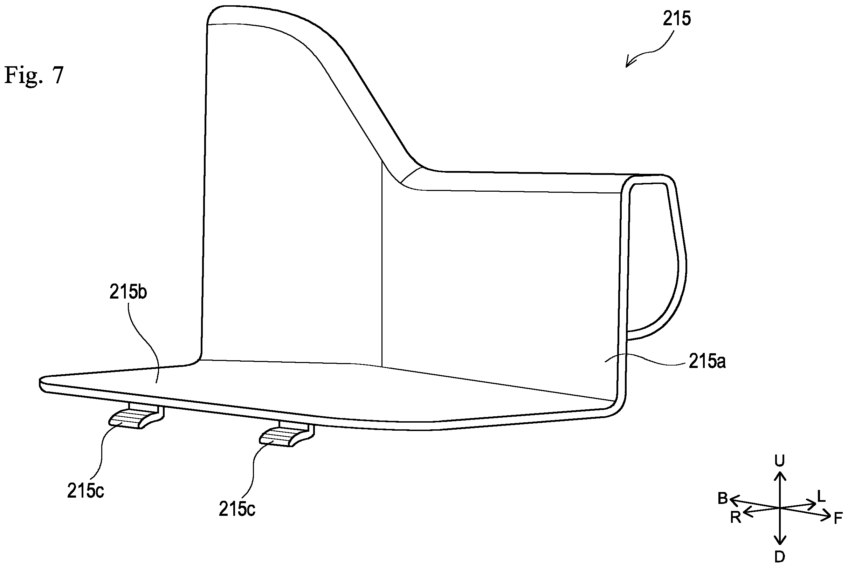

The guide portion 215c illustrated in Figs. 7 and 8 guides attachment of the cover portion 215 to the first accommodation portion 210. The guide portion 215c is provided on a right end side of a lower surface of the bottom cover portion 215b. A plurality of (two in the illustrated example) the guide portions 215c are provided at intervals in the front-rear direction. As illustrated in Fig. 8B, the guide portion 215c forms a substantially U shape that opens rightward in front view together with a right end portion of the bottom cover portion 215b. In a state where the cover portion 215 is attached to the first accommodation portion 210, the recess 214a formed in the bottom portion 212 is inserted into the opening formed by the guide portion 215c. By providing the guide portion 215c, it is possible to restrict the bottom cover portion 215b from floating with respect to the bottom portion 212. As a result, it is possible to suppress water from entering the internal space R through the gap formed between the bottom cover portion 215b and the opening 214.

The rib 215d illustrated in Fig. 8A reinforces the cover portion 215. The ribs 215d are formed in a lattice shape on a back surface (surface facing the internal space R side) of the cover portion 215. Since the rib 215d is formed, deformation of the cover portion 215 can be suppressed. Furthermore, in the present embodiment, the rib 215d extending in the left-right direction in the bottom cover portion 215b is provided so as to reach the guide portion 215c. Accordingly, it is possible to reinforce the guide portion 215c and more effectively restrict the bottom cover portion 215b from floating.

Furthermore, in a state where the cover portion 215 is attached to the first accommodation portion 210, the gap between the recess 214a and the cover portion 215 is closed by the packing 214b provided in the recess 214a (see Fig. 8B). As a result, it is possible to suppress water from entering the internal space R through the gap.

The second accommodation portion 220 illustrated in Figs. 3 and 4 can accommodate articles on a rear side of the left console 200 with respect to the first accommodation portion 210. The second accommodation portion 220 is formed to be recessed downward on an upper surface of the left console 200. The second accommodation portion 220 according to the present embodiment is formed so as to be capable of accommodating the mounting equipment 90. The second accommodation portion 220 includes a side wall portion 221 and a bottom portion 222.

The side wall portion 221 is a portion constituting a side wall of the second accommodation portion 220. The side wall portion 221 is formed so as to rise from an outer peripheral portion of the bottom portion 222 described later. The side wall portion 221 includes a first wall portion 221a constituting a front wall of the second accommodation portion 220 and second wall portions 221c constituting walls on both left and right sides of the second accommodation portion 220. Note that a rear wall of the second accommodation portion 220 includes a bottle holding portion 230 and an electric extraction portion 240 described later.

The first wall portion 221a is formed to separate the space in the first accommodation portion 210 and the space in the second accommodation portion 220. A cutout portion 221b is formed in the first wall portion 221a so as to penetrate the first wall portion 221a in the front-rear direction. As illustrated in Fig. 4, the cutout portion 221b is formed so as to be located on the left side of the holding portion 213 of the first accommodation portion 210. The cutout portion 221b is formed over the entire first wall portion 221a in the vertical direction. Note that the shape of the cutout portion 221b is not limited to that described above. For example, the cutout portion 221b can be formed in a hole shape penetrating the first wall portion 221a in the front-rear direction.

Furthermore, as illustrated in Fig. 4, a fixing hole 221d for attaching a pressing portion 250 to be described later is provided at an upper end portion of the second wall portion 221c. The fixing hole 221d is formed in a long hole shape elongated in the left-right direction. The fixing holes 221d are formed (four in total) on each of a front end side and a rear end side of the left and right second wall portions 221c.

The bottom portion 222 constitutes the bottom of the second accommodation portion 220. The bottom portion 222 is formed at a position higher than the bottom portion 212 of the first accommodation portion 210. The bottom portion 222 is formed so as to be inclined downward toward the front (see Fig. 11). The water located inside the second accommodation portion 220 passes through the cutout portion 221b and flows toward a side of the first accommodation portion 210.

The bottle holding portion 230 illustrated in Figs. 3 and 4 can hold (accommodate) an article such as a bottle. The bottle holding portion 230 is disposed on the rear side of the second accommodation portion 220 in the left console 200. The bottle holding portion 230 is formed in a substantially cylindrical shape that opens upward.

The electric extraction portion 240 can extract electricity from a power supply of the tractor 1. The electric extraction portion 240 is disposed in the vicinity of the second accommodation portion 220. More specifically, the electric extraction portion 240 is disposed on the rear side of the second accommodation portion 220 so as to be adjacent to the second accommodation portion 220. Furthermore, the electric extraction portion 240 is disposed on the left side of the bottle holding portion 230. In the present embodiment, the bottle holding portion 230 and the electric extraction portion 240 constitute a rear wall of the second accommodation portion 220.

The electric extraction portion 240 is provided with an electricity outlet 241 that opens toward a side of the second accommodation portion 220. As the electricity outlet 241, a USB port or a cigarette lighter socket can be employed. Accordingly, in a case where the mounting equipment 90 is mounted in the second accommodation portion 220, a charging cord can be inserted into the electricity outlet 241 to feed electric power to the mounting equipment 90.

The pressing portion 250 illustrated in Figs. 3, 9, and 10 can hold the mounting equipment 90 placed (accommodated) in the second accommodation portion 220 from above. The pressing portion 250 is detachably attached to the side wall portion 221 of the second accommodation portion 220. Note that, in Figs. 2 and 4, illustration of the pressing portion 250 is omitted. The pressing portion 250 includes a support portion 251 and a band portion 252.

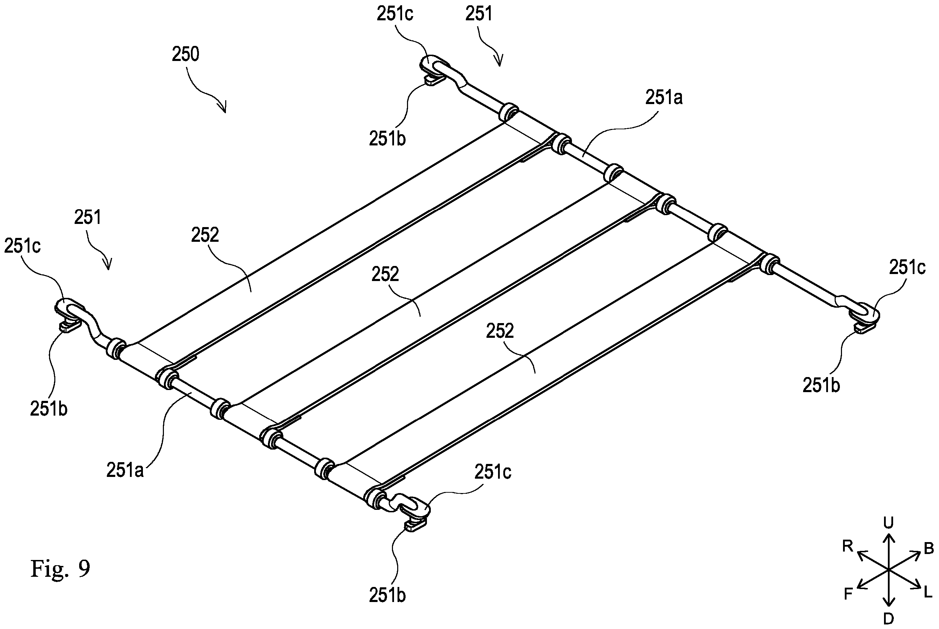

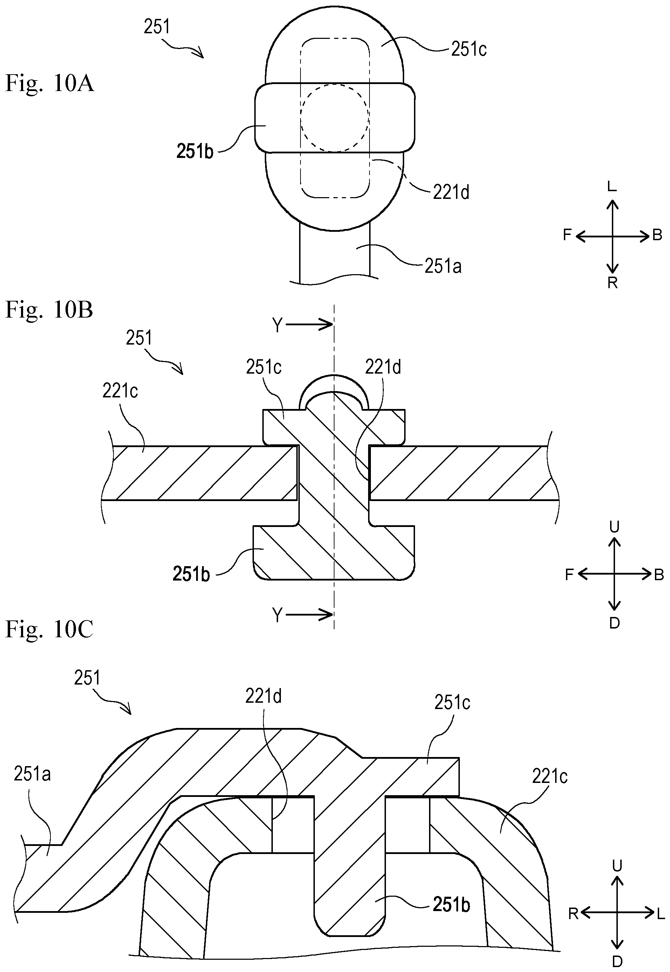

The support portion 251 illustrated in Figs. 9 and 10 is attached to the side wall portion 221 and supports the band portion 252 described later. The support portion 251 is formed in a shape elongated in the left-right direction. The support portion 251 is formed of a material having flexibility. Therefore, the support portion 251 is formed to be appropriately bendable as necessary. As illustrated in Fig. 3, the support portion 251 is disposed so as to bridge between the left and right second wall portions 221c. Two support portions 251 are provided so as to be located on both sides of the second accommodation portion 220 in the front-rear direction. Each of the support portions 251 includes a main body 251a, a fixing portion 251b, and a closing portion 251c.

The main body 251a is a main structural body of the support portion 251. The main body 251a is formed in a substantially cylindrical shape extending in the left-right direction.

The fixing portion 251b is a portion fixed to the second wall portion 221c. The fixing portion 251b is formed so as to extend downward from both end portions in the left-right direction of the main body 251a. The fixing portion 251b is fixed to the second wall portion 221c by being inserted into the fixing hole 221d of the second wall portion 221c. Note that a method of inserting the fixing portion 251b into the fixing hole 221d will be described later. As illustrated in Figs. 10(a) and (b), a distal end portion of the fixing portion 251b in the extending direction is formed in a shape extending in the front-rear direction in bottom view. The shape of the fixing portion 251b in plan view is substantially similar to a shape obtained by rotating the fixing hole 221d of the second wall portion 221c by 90° in plan view.

The closing portion 251c illustrated in Fig. 10 closes the fixing hole 221d from above in a state where the support portion 251 is attached to the second wall portion 221c. The closing portion 251c is formed in a substantially plate shape with the plate surface oriented in the vertical direction. The shape of the closing portion 251c in plan view (bottom view) is formed to be larger than the shape of the fixing hole 221d in plan view (see Fig. 10A).

The band portion 252 illustrated in Fig. 9 presses the mounting equipment 90 of the second accommodation portion 220 from above while being supported by the support portion 251. The band portion 252 is formed of a stretchable material (for example, rubber). The band portion 252 is formed in a band shape elongated in the front-back direction. Both end portions of the band portion 252 in the front-rear direction are fixed to the front and rear support portions 251. A plurality of (three in the illustrated example) the band portions 252 is provided at intervals in the left-right direction.

Hereinafter, a method of attaching the pressing portion 250 to the second wall portion 221c will be described. When attaching the pressing portion 250, a worker first rotates the pressing portion 250 by 90° in plan view with respect to the direction illustrated in Figs. 3 and 9 so that the direction of the fixing portion 251b of the support portion 251 and the direction of the fixing hole 221d of the second wall portion 221c coincide with each other. In this state, the worker inserts the arbitrary fixing portion 251b into the fixing hole 221d, and then returns the direction of the pressing portion 250. Here, since the main body 251a has flexibility, the worker can match the direction of the remaining fixing portion 251b with the direction of the fixing hole 221d by bending the main body 251a as necessary. In this state, the worker can fix each of the fixing portions 251b to the second wall portion 221c by inserting the fixing portion 251b into the fixing hole 221d and then returning the direction of the fixing portion 251b.

In a state where the pressing portion 250 is attached to the second wall portion 221c, as illustrated in Fig. 10B, the fixing portion 251b is disposed such that a front-rear dimension of the fixing portion 251b is larger than a front-rear dimension of the fixing hole 221d. As a result, the fixing portion 251b functions as a stopper, and the pressing portion 250 can be prevented from being detached from the second wall portion 221c.

Furthermore, as illustrated in Figs. 10(b) and (c), in a state where the pressing portion 250 is attached to the second wall portion 221c, the lower surface of the closing portion 251c abuts on the upper surface of the second wall portion 221c, and the entire fixing hole 221d is covered by the closing portion 251c. As a result, it is possible to suppress water from entering the internal space R from the fixing hole 221d.

By providing the pressing portion 250, the mounting equipment 90 of the second accommodation portion 220 can be pressed from above by the band portion 252. Accordingly, it is possible to suppress falling or the like of the mounting equipment 90 accommodated in the second accommodation portion 220.

The wiring hole 260 illustrated in Fig. 11 allows wiring (not illustrated) connecting the autonomous driving equipment 70 and the mounting equipment 90 to be taken out from a side of the internal space R to the outside of the left console 200. A connector attachable to and detachable from the mounting equipment 90 (for example, correction equipment) can be provided on a distal end side of the wiring. The wiring hole 260 is formed so as to penetrate a side wall (for example, a right side wall) of the left console 200. The wiring hole 260 is provided with a grommet 261 capable of closing a gap between the wiring hole 260 and the wiring. The grommet 261 is made of a flexible material such as rubber. By providing the grommet 261, it is possible to suppress water from entering the internal space R from the wiring hole 260 in a state where the wiring passes through the wiring hole 260. According to the above configuration, for example, unlike a configuration in which a cover capable of opening and closing a hole for passing a wiring is separately provided and the cover is left open when the autonomous driving equipment 70 and the mounting equipment 90 are connected, the autonomous driving equipment 70 and the mounting equipment 90 can be suitably connected.

The configuration of the left console 200 has been described above. According to the left console 200 of the present embodiment, the autonomous driving equipment 70 can be suitably accommodated. That is, in a general tractor, the autonomous driving equipment 70 may be accommodated in the roof 11 of the cabin 10. However, the inside of the roof 11 tends to have a relatively high temperature, and there is a possibility that a temperature condition suitable for use of the autonomous driving equipment 70 (in particular, an image ECU or the like having a relatively large calorific value) is not satisfied. In the present embodiment, by using the space inside the left console 200 in the cabin 10 where the temperature is less likely to rise as compared to the inside of the roof 11 or the like, even if autonomous driving equipment 70 is not suitable for a high-temperature environment, the autonomous driving equipment 70 can be suitably accommodated.

Furthermore, even in a case where water enters the first accommodation portion 210 or the second accommodation portion 220, the left console 200 can discharge the water to the internal space R through the hole 212d so as not to be caught by the autonomous driving equipment 70. Hereinafter, an aspect of discharging water in each accommodating portion will be described with reference to Fig. 5 and Figs. 11 to 13. Note that, in Figs. 12 and 13, illustration of the autonomous driving equipment 70 is omitted.

The left console 200 is provided with a flow path through which water in the first accommodation portion 210 and the second accommodation portion 220 can flow toward the hole 212d. In the present embodiment, the cutout portion 221b and the bottom portion 222 of the second accommodation portion 220 and the bottom portion 212 of the first accommodation portion 210 constitute a flow path. Specifically, as indicated by broken arrows in Figs. 5 and 11, the water that has entered the second accommodation portion 220 flows toward the front side along the inclined bottom portion 222, passes through the cutout portion 221b, and is discharged to the first accommodation portion 210 on the downstream side.

Water that has entered the first accommodation portion 210 from the second accommodation portion 220 or water that has directly entered the first accommodation portion 210 flows toward the right front corner portion along the inclined bottom portion 212. As illustrated in Fig. 12, the water flowing toward the right front corner portion flows along the first groove 212b of the groove 212a and is discharged to the internal space R through the hole 212d.

Furthermore, of the water directly entering the first accommodation portion 210, the water entering the holding space of the holding portion 213 flows toward the right front corner portion along the inclined bottom portion 212. As illustrated in Fig. 13, the water flows along the second groove 212c of the groove 212a and is discharged to the internal space R through the hole 212d.

As described above, according to the left console 200 of the present embodiment, by discharging the water in the first accommodation portion 210 and the second accommodation portion 220, it is possible to suppress accumulation of water in each accommodation portion. Furthermore, since the hole 212d is disposed at a position not overlapping with the autonomous driving equipment 70 in plan view, it is possible to suppress water discharged from the hole 212d from being splashed onto the autonomous driving equipment 70.

As described above, the tractor 1 (working vehicle) according to the present embodiment includes: a left console 200 (console) disposed within the cabin 10; and electrical equipment (autonomous driving equipment 70) accommodated inside the left console 200.

With such a configuration, the electrical equipment can be suitably accommodated. That is, by using a space inside the left console 200 within the cabin 10 where the temperature is relatively difficult to increase, it is possible to suitably accommodate the electrical equipment unsuitable for a high-temperature environment.

Furthermore, the autonomous driving equipment 70 is disposed in the internal space R defined by the left console 200 and a fender 8 covered by the left console 200.

With this configuration, the autonomous driving equipment 70 can be accommodated using the internal space R between the left console 200 and the fender 8.

Furthermore, the left console 200 is disposed on a left side within the cabin 10.

With such a configuration, it is possible to accommodate the electrical equipment using the left console 200 instead of the right console 100 (right-side console) in which equipment generally used for the driving operation is intensively disposed.

Furthermore, the gear shift lever 110 (gear shift operation section) disposed on one side in the left-right direction within the cabin 10 and used for operating a transmission of a vehicle body is included, and the left console 200 is disposed on a side opposite to the gear shift lever 110 in the left-right direction.

With such a configuration, in general, the electrical equipment can be accommodated using the left console 200 that is a console on the side opposite to the side where equipment generally used for the driving operation such as the gear shift lever 110 is intensively disposed.

Furthermore, the hydraulic lever 120 (hydraulic operation section) disposed on one side in the left-right direction within the cabin 10 and used for a hydraulic control operation for a working device provided in a vehicle body is included, and the left console 200 is disposed on a side opposite to the hydraulic lever 120 in the left-right direction.

With such a configuration, the electrical equipment can be accommodated using the left console 200 that is a console on the side opposite to the side where equipment generally used for the driving operation such as the hydraulic lever 120 is intensively disposed.

Furthermore, the electrical equipment includes the autonomous driving equipment 70 used for controlling autonomous driving of the tractor 1.

With such a configuration, equipment (autonomous driving equipment 70) that is generally disposed inside the roof of the cabin 10 can be accommodated inside the left console 200.

The autonomous driving equipment 70 includes equipment (image ECU) capable of recognizing a recognition target based on acquisition information of an information acquisition section (camera 40 and radar unit 50) capable of acquiring information around a vehicle body.

With this configuration, it is possible to accommodate, within the left console 200, equipment (image ECU) that has a relatively large calorific value and a relatively large arithmetic processing amount and may not be suitable for a high-temperature environment.

Furthermore, the left console 200 includes an accommodation portion (first accommodation portion 210, second accommodation portion 220) formed to be recessed downward on an upper surface of the left console 200 and capable of accommodating an article, and in the first accommodation portion 210, a hole 212d that is disposed at a position not overlapping with the autonomous driving equipment 70 in a plan view and through which water can be discharged is formed.

With such a configuration, it is possible to suppress accumulation of water in the accommodation portion (first accommodation portion 210, second accommodation portion 220) and to suppress the water from being splashed on the autonomous driving equipment 70 within the left console 200.

Furthermore, in the left console 200, a flow path through which water can flow toward a side of the hole 212d is formed, and the flow path includes an inclined portion (bottom portion 212) in which a bottom portion of the first accommodation portion 210 is inclined to allow water within the first accommodation portion 210 to flow toward the side of hole 212d.

With such a configuration, the water can suitably flow toward the hole 212d using the inclined portion (bottom portion 212).

Furthermore, in the left console 200, a flow path through which water can flow toward a side of the hole 212d is formed, the accommodation portion includes: a first accommodation portion 210 in which the hole 212d is formed; and a second accommodation portion 220 located on an upstream side of the flow path with respect to the first accommodation portion 210, and the flow path includes a cutout portion 221b having a shape in which a first wall portion 221a (side wall) of the second accommodation portion 220 is cut out to allow water within the second accommodation portion to flow toward the side of the hole 212d.

With such a configuration, the water can suitably flow toward the hole using the cutout portion 221b.

Furthermore, the tractor 1 includes a pressing portion 250 formed of a stretchable material and capable of pressing the article accommodated in the second accommodation portion 220 (accommodation portion) from above.

With such a configuration, it is possible to suppress falling or the like of the article accommodated in the second accommodation portion 220.

Furthermore, the left console 200 includes an electricity outlet 241 disposed in the vicinity of the second accommodation portion 220 (accommodation portion) and capable of extracting electricity from a power source.

With this configuration, electricity extracted from the electricity outlet 241 can be fed to the mounting equipment 90 (electronic equipment) accommodated in the accommodation portion.

Note that the tractor 1 according to the present embodiment is an embodiment of the working vehicle according to the disclosure.

Furthermore, the left console 200 according to the present embodiment is an embodiment of the console according to the disclosure.

Furthermore, the gear shift lever 110 according to the present embodiment is an embodiment of the gear shift operation section according to the disclosure.

Furthermore, the hydraulic lever 120 according to the present embodiment is an embodiment of the hydraulic operation section according to the disclosure.

Furthermore, the autonomous driving equipment 70 according to the present embodiment is an embodiment of the equipment used for controlling autonomous driving according to the disclosure.

Furthermore, the bottom portion 212 according to the present embodiment is an embodiment of the inclined portion according to the disclosure.

Furthermore, the camera 40 and the radar unit 50 according to the present embodiment are an embodiment of the information acquisition section according to the disclosure.

Although one embodiment of the disclosure has been described above, the disclosure is not limited to the above configuration, and various modifications can be made within the scope of the invention described in the claims.

For example, in the present embodiment, an example in which the autonomous driving equipment 70 is adopted as the electrical equipment accommodated in the left console 200 has been described, but the disclosure is not limited thereto. As the electrical equipment, various equipment mounted on the tractor 1 can be employed.

Furthermore, in the present embodiment, an example in which the remote controller 80 and the mounting equipment 90 are accommodated in the accommodation portion (first accommodation portion 210, second accommodation portion 220) of the left console 200 has been described, but the disclosure is not limited thereto. Various articles can be accommodated in the accommodation portion.

Furthermore, in the present embodiment, an example in which the left console 200 is provided with two accommodation portions (first accommodation portion 210, second accommodation portion 220) has been described, but the disclosure is not limited thereto. For example, only the first accommodation portion 210 may be provided. Furthermore, an accommodation portion may be further added on the upstream side of the flow path with respect to the second accommodation portion 220. In this case, it is possible to provide a cutout portion constituting the flow path on a side wall of the added accommodation portion.

In addition, the shape, size, arrangement, number, and the like of the accommodation portion of the left console 200 exemplified in the present embodiment can be arbitrarily changed. Furthermore, the shape, size, arrangement, number, and the like of the flow path (the cutout portion 221b, the inclined portion, and the like) and the hole 212d formed in the left console 200 can also be arbitrarily changed.

Furthermore, in the present embodiment, an example in which the band portion 252 is provided as a member having stretchability of the pressing portion 250 has been described, but the disclosure is not limited thereto. For example, instead of the band portion 252, various stretchable members such as a net can be adopted.

Furthermore, in the present embodiment, the cabin 10 is of a six-pillar type including the front pillar 12, the rear pillar 13, and the center pillar 14, but the disclosure is not limited thereto. As the cabin 10, for example, various configurations such as a four-pillar type without the center pillar 14 can be adopted.

Furthermore, in the present embodiment, an example in which the packing 214b is provided in the recess 214a of the opening 214 of the left console 200 has been described, but the disclosure is not limited thereto. For example, the packing 214b can be provided on a side of the cover portion 215. Furthermore, a configuration in which the packing 214b is not provided can also be adopted.

Furthermore, in the present embodiment, the example in which the grommet 261 is provided in the wiring hole 260 has been described, but the disclosure is not limited thereto. For example, the grommet 261 may not be provided.

In addition, the shape, structure, and the like of each portion exemplified in the present embodiment are merely examples, and the configuration of each portion can be arbitrarily changed.

Furthermore, in the above embodiment, the tractor 1 has been exemplified as the working vehicle, but the working vehicle is not limited to such an aspect. For example, the working vehicle may be another agricultural vehicle, a construction vehicle, an industrial vehicle, or the like.

## Claims

1. A working vehicle (1) comprising:
a console (200) disposed within a cabin (10); and
electrical equipment (70) accommodated inside the console (200).

2. The working vehicle (1) according to claim 1, wherein the electrical equipment (70) is disposed in an internal space (R) defined by the console (200) and a fender (8) covered by the console (200).

3. The working vehicle (1) according to claim 1, wherein the console (200) is disposed on a left side within the cabin (10).

4. The working vehicle (1) according to claim 1, further comprising a gear shift operation section (110) disposed on one side in a left-right direction within the cabin (10) and used for operating a transmission of a vehicle body,
wherein the console (200) is disposed on a side opposite to the gear shift operation section (110) in the left-right direction.

5. The working vehicle (1) according to claim 1, further comprising a hydraulic operation section (120) disposed on one side in a left-right direction within the cabin (10) and used for a hydraulic control operation for a working device provided in a vehicle body,
wherein the console (200) is disposed on a side opposite to the hydraulic operation section (120) in the left-right direction.

6. The working vehicle (1) according to claim 1, wherein the electrical equipment (70) includes autonomous driving equipment (70) used for controlling autonomous driving of the working vehicle (1).

7. The working vehicle (1) according to claim 6, wherein the autonomous driving equipment (70) includes equipment capable of recognizing a recognition target based on acquisition information of an information acquisition section (40,50) capable of acquiring information around a vehicle body.

8. The working vehicle (1) according to claim 1, wherein
the console (200) includes an accommodation portion (210,220) formed to be recessed downward on an upper surface of the console (200) and capable of accommodating an article, and
in the accommodation portion (210,220), a hole (212d) that is disposed at a position not overlapping with the electrical equipment (70) in a plan view and through which water can be discharged is formed.

9. The working vehicle (1) according to claim 8, wherein
in the console (200), a flow path through which water can flow toward a side of the hole (212d) is formed, and
the flow path includes an inclined portion (212) in which a bottom portion of the accommodation portion (210,220) is inclined to allow water within the accommodation portion (210,220) to flow toward the side of the hole (212d).

10. The working vehicle (1) according to claim 8, wherein
in the console (200), a flow path through which water can flow toward a side of the hole (212d) is formed,
the accommodation portion (210,220) includes a first accommodation portion (210) in which the hole (212d) is formed, and a second accommodation portion (220) located on an upstream side of the flow path with respect to the first accommodation portion (210), and
the flow path includes a cutout portion (221b) having a shape in which a side wall (221a) of the second accommodation portion (220) is cut out to allow water within the second accommodation portion (220) to flow toward the side of the hole (212d).

11. The working vehicle (1) according to any one of claims 8 to 10, further comprising
a pressing portion (250) formed of a stretchable material and capable of pressing the article accommodated in the accommodation portion (210,220) from above.

12. The working vehicle (1) according to any one of claims 8 to 10, wherein the console (200) includes an electricity outlet (241) disposed in a vicinity of the accommodation portion (210,220) and capable of extracting electricity from a power source.
